# EUROPÄISCHE PATENTANMELDUNG

(11) **EP 3 021 014 A1**
(43) Veröffentlichungstag der Anmeldung: **18.05.2016**
(21) Anmeldenummer: 15192739.9
(22) Anmeldetag: 03.11.2015
(51) Int. Cl.: F16J 15/10, F16J 15/3284

(54) **DICHTUNGSELEMENT**

(30) Priorität: 14.11.2014 DE 102014223244
(71) Anmelder: Vaillant GmbH, 42859 Remscheid (DE)
(72) Erfinder: Rebien, Karsten, 42489 Wülfrath (DE)
(74) Vertreter: Hocker, Thomas

(57) **Zusammenfassung**

Bei einem ringförmigen Dichtungselement (1) mit einem ringförmigen Dichtprofil (2) sind senkrecht zur Ringlinie an einer oder zwei Seiten flügelförmige Ansätze (3) angeordnet, welche mit dem ringförmigen Dichtprofil (2) eine Nut (4) bilden

## Beschreibung

Die Erfindung bezieht sich auf ein ringförmiges Dichtungselement, welches zwischen zwei unterschiedlichen Metallen eingesetzt wird.

Bei Dichtungen zwischen beispielsweise Aluminium und Kupfer kann es zu einer elektrochemischen Korrosion des Aluminiums kommen. Gemäß dem Stand der Technik sind bei ringförmigen Dichtungen Kunststoffbuchsen bekannt, welche zwischen den beiden Metallen eine direkte Verbindung vermeiden sollen. Dies bedingt ein weiteres Bauteil und somit entsprechende Kosten.

Ziel der Erfindung ist es, die Nachteile des Standes der Technik zu vermeiden und ein einfaches ringförmiges Dichtungselement der eingangs erwähnten Art vorzuschlagen, welche elektrochemische Korrosion vermeidet.

Erfindungsgemäß wird dies dadurch gelöst, dass bei einem ringförmigen Dichtungselement mit einem ringförmigen Dichtprofil senkrecht zur Ringlinie an mindestens einer Seite ein flügelförmiger Ansatz angeordnet ist, welcher mit dem ringförmigen Dichtprofil eine Nut bilden. Diese Nut eignet sich zum Überzug eines korrespondierenden, metallischen Bundes, so dass der Bund nicht in Kontakt mit dem abzudichtenden Körper tritt, so dass die elektrochemische Korrosion vermieden wird.

Vorteilhafte Ausgestaltungen ergeben sich durch die Merkmale der abhängigen Ansprüche.

So ist das ringförmige Dichtungselement bevorzugt einstückig, so dass der flügelförmige Ansatz einerseits unverlierbar und andererseits das Dichtungselement in einem Arbeitsgang herstellbar ist.

Das ringförmige Dichtungselement ist bevorzugt aus Kautschuk, Perfluorkautschuk (FFKM oder FFPM), Polyethylen (PE) oder Polytetrafluorethylen (PTFE) hergestellt.

Die Erfindung wird nun anhand der Zeichnung näher erläutert. Dabei zeigen:
Fig. 1 eine Verbindung gemäß dem Stand der Technik
Fig. 2 ein erfindungsgemäßes ringförmige Dichtungselement sowie
Fig. 3 ein montiertes erfindungsgemäßes ringförmige Dichtungselement.

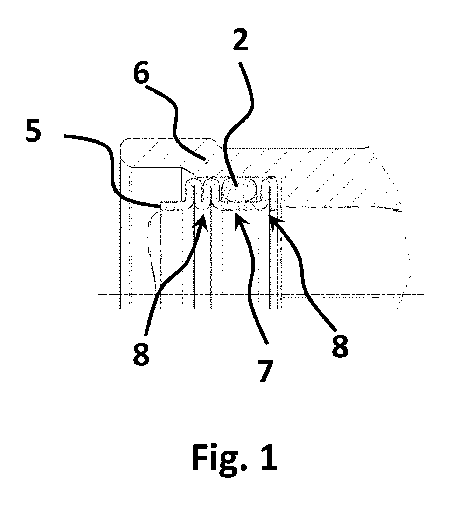

Figur 1 zeigt ein Kupferrohr 5, das mit einem Aluminium-Wärmetauscher 6 verbunden ist. Das Kupferrohr 5 verfügt über eine Ringnut 7, welche durch zwei gefaltete Bünde 8 gebildet wird. In dieser Ringnut 7 befindet sich ein ringförmigen Dichtprofil 2. Da die Bünde 8 des Kupferrohrs 5 in Kontakt mit dem Aluminium-Wärmetauscher 6 treten können, kann elektrochemische Korrosion entstehen.

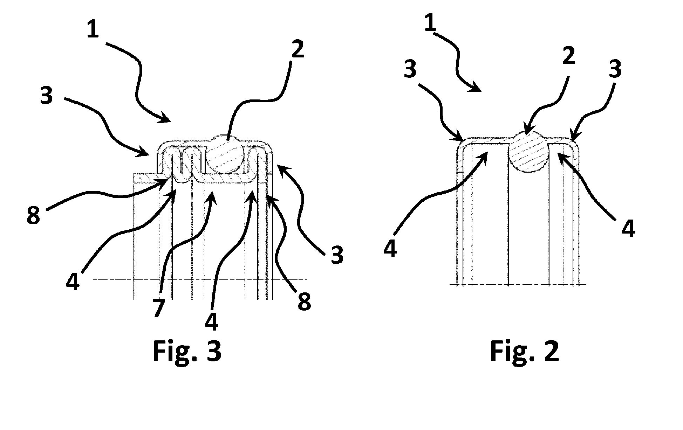

Figur 2 zeigt das erfindungsgemäße ringförmige Dichtungselement 1 mit ringförmigem Dichtprofil 2 und zwei flügelförmigen Ansätze 3 senkrecht zur Ringlinie an beiden Seiten. Die flügelförmigen Ansätze 3 bilden mit dem ringförmigen Dichtprofil 2 eine Nut 4. Das ringförmige Dichtungselement 1 ist hierbei einstückig aus Kautschuk, Perfluorkautschuk (FFKM oder FFPM), Polyethylen (PE) oder Polytetrafluorethylen (PTFE)hergestellt.

Figur 3 zeigt das erfindungsgemäße ringförmige Dichtungselement 1 mit ringförmigem Dichtprofil 2 auf einem Kupferrohr 5, welches über eine Ringnut 7 verfügt, welche durch zwei Bünde 8 des Kupferrohres 5 gebildet werden. Das mit ringförmige Dichtprofil 2 befindet sich in der Ringnut 7. Die Nuten 4 des ringförmigen Dichtungselements 1 überdecken die zwei Bünde 8 des Kupferrohres 5, so dass diese nicht in Kontakt mit anderen Metallen treten können. Hierbei überdeckt insbesondere der rechte flügelförmige Ansatz 3 die Stirnseite des Kupferrohres 5 überdeckt, so dass das Kupferrohr 5 beim Einstecken in einen korrespondierenden, metallischen Körper nicht in direkten Kontakt mit diesem treten kann.

### Bezugszeichenliste

- 1: ringförmiges Dichtungselement
- 2: ringförmigem Dichtprofil
- 3: flügelförmige Ansätze
- 4: Nut
- 5: Kupferrohr
- 6: Aluminium-Wärmetauscher
- 7: Ringnut
- 8: Bund

## Patentansprüche

1. Ringförmiges Dichtungselement (1) mit einem ringförmigen Dichtprofil (2), **dadurch gekennzeichnet, dass** senkrecht zur Ringlinie an einer oder zwei Seiten flügelförmige Ansätze (3) angeordnet sind, welche mit dem ringförmigen Dichtprofil (2) eine Nut (4) bilden.

2. Ringförmiges Dichtungselement (1) nach Anspruch 1, **dadurch gekennzeichnet, dass** das ringförmige Dichtungselement (1) einstückig ist.

3. Ringförmiges Dichtungselement (1) nach Anspruch 1 oder 2, **dadurch gekennzeichnet, dass** das ringförmige Dichtungselement (1) aus Kautschuk, Perfluorkautschuk (FFKM oder FFPM), Polyethylen (PE) oder Polytetrafluorethylen (PTFE)hergestellt ist.
